# NEUE EUROPÄISCHE PATENTSCHRIFT

(11) **EP 2 769 830 B2**
(45) Veröffentlichungstag und Bekanntmachung des Hinweises auf die Entscheidung über den Einspruch: **17.08.2022**
(45) Hinweis auf die Patenterteilung: 27.09.2017
(21) Anmeldenummer: 14155198.6
(22) Anmeldetag: 14.02.2014
(51) Int. Cl.: B29C 65/08, B29C 65/78

(54) **Rundsonotrode**
Round sonotrode
Sonotrode ronde

(30) Priorität: 20.02.2013 DE 102013202766
(43) Veröffentlichungstag der Anmeldung: 27.08.2014
(73) Patentinhaber: MS Ultraschall Technologie GmbH, 78549 Spaichingen (DE)
(72) Erfinder: Scheu, Jochen, 78054 Villingen-Schwenningen (DE)
(74) Vertreter: Manitz Finsterwald Patent- und Rechtsanwaltspartnerschaft mbB

(56) Entgegenhaltungen:
- EP-A1- 0 450 146
- EP-B1- 1 849 583
- DE-A1- 1 479 724
- DE-A1- 2 508 175
- DE-A1- 3 603 627
- DE-A1- 19 636 217
- DE-A1-102010 000 988
- DE-B2- 2 355 333
- DE-B4- 10 301 433
- DE-C1- 4 317 621
- DE-U1- 8 702 983
- GB-A- 2 320 906
- JP-A- H06 344 474
- JP-A- H06 344 474
- JP-A- 2002 127 254
- JP-U- H04 525
- JP-U- S63 149 283
- JP-U- S63 188 126
- US-B2- 6 626 349

## Beschreibung

Die vorliegende Erfindung betrifft eine Rundsonotrode, die einen Sonotrodenkörper umfasst, der an seinem vorderen Ende einen Aufnahmeraum für ein Werkstück aufweist, wobei der Aufnahmeraum von einem Ringsteg umgeben ist, der an seiner vorderen Stirnseite eine Schweißfläche aufweist.

Eine solche Rundsonotrode ist beispielsweise aus der DE 10 2010 003 268 A1 bekannt und dient dort zum Ultraschallverschweißen eines Kunststoffverschlusses mit einem Schlauchbeutel. Eine Rundsonotrode nach dem Oberbegriff des Anspruchs 1 ist aus dem Stand der Technik bekannt (vgl. beispielsweise JP S63 149283 U, JP H06 344474 A, EP 0 450 146 A1, JP 2002 127254 A, JP H04 525 U oder JP S63 188126 U).

Es ist die Aufgabe der vorliegenden Erfindung, eine Rundsonotrode nach dem Oberbegriff des Anspruchs 1 so weiterzubilden, dass mit dieser eine verbesserte Positionierung des Werkstücks möglich ist.

Die Lösung dieser Aufgabe erfolgt durch die Merkmale der unabhängigen Ansprüche. Erfindungsgemäß dient die Sonotrode nicht lediglich zum Verschweißen des Werkstücks an einer Gegenfläche. Vielmehr kann mit der erfindungsgemäßen Rundsonotrode das Werkstück selbst innerhalb des Aufnahmeraums gehalten bzw. gelagert werden, so dass das Werkstück bei Einleitung des Schweißvorgangs eine reproduzierbare, exakte Position einnimmt. Auf diese Weise ist sichergestellt, dass auch im automatisierten Fertigungsbetrieb bei Aufsetzen des Werkstücks auf eine Gegenfläche eine gewünschte Sollposition für das Werkstück eingenommen wird.

Der Sonotrodenkörper weist zumindest eine Aussparung auf, die dessen äußere Mantelfläche mit dem Aufnahmeraum verbindet. Eine solche Aussparung kann beispielsweise in Form eines Langlochs ausgebildet sein, das ein ordnungsgemäßes Schwingen der Sonotrode ermöglicht. Erfindungsgemäß ist ein Halteelement der Werkstückhalterung durch die Aussparung hindurchgeführt. Auf diese Weise ist sichergestellt, dass der eigentliche Sonotrodenkörper, der beim Schweißvorgang in mechanische Schwingungen versetzt wird, mit der Werkstückhalterung nicht in Berührung steht. Vielmehr kann das Halteelement, das durch die Aussparung hindurchgeführt ist, an einen Bauteil befestigt werden, das nicht schwingt, wodurch eine schwingungsentkoppelte Lagerung von Werkstückhalterung relativ zu dem Sonotrodenkörper verwirklicht ist. Ein Schwingen des Sonotrodenkörpers beeinflusst somit nicht die Position der Werkstückhalterung.

Vorteilhafte Ausführungsformen der Erfindung sind in der Beschreibung, der Zeichnung sowie den Unteransprüchen beschrieben.

Nach einer ersten vorteilhaften Ausführungsform kann die Werkstückhalterung einen Zentrierdorn aufweisen. Hierdurch lässt sich zum einen ein Werkstück automatisiert auf die Werkstückhalterung aufsetzen. Andererseits kann mit Hilfe des Zentrierdorns das Positionieren des Werkstücks an der gewünschten Sollposition erleichtert werden.

Nach einer weiteren vorteilhaften Ausführungsform kann der Zentrierdorn insbesondere in einer linearen Fahrbewegung gegen eine Rückstellkraft, beispielsweise eine Feder, Gasdruckfeder oder einen Pneumatikzylinder, relativ zu dem Sonotrodenkörper bewegbar sein. Hierdurch lässt sich die Sonotrode mit der integrierten Werkstückhalterung und einem darauf befindlichen Werkstück an eine Gegenfläche anstellen, wobei vor Beginn des Schweißvorgangs das Werkstück mit der Rückstellkraft gegen die Gegenfläche gedrückt wird, ohne dass jedoch bereits eine Berührung zwischen der Schweißfläche und dem Werkstück stattfindet.

Nach einer weiteren vorteilhaften Ausführungsform kann in die Rundsonotrode ein Sensor integriert sein, der das Vorhandensein eines Werkstücks und/oder eine ordnungsgemäße Orientierung des Werkstücks an der Werkstückhalterung detektiert. Dies ermöglicht eine automatisierte Überwachung des Schweißvorgangs, wobei gleichzeitig sichergestellt ist, dass sich das Werkstück bei Beginn des Schweißvorgangs in der gewünschten Sollposition befindet.

Weiterhin kann es vorteilhaft sein, wenn die Werkstückhalterung ein mechanisches Codierelement, wie beispielsweise einen Vorsprung oder eine Vertiefung aufweist, mit dem eine ordnungsgemäße Orientierung eines Werkstücks an der Werkstückhalterung sichergestellt ist.

Die Aussparung zur Hindurchführung eines Halteelements der Werkstückhalterung kann entweder eine geschlossene Umfangskontur oder aber eine zur Schweißfläche hin offene Umfangskontur aufweisen. Weiterhin ist es möglich, die Aussparung in einem Boden der Rundsonotrode vorzusehen, sodass das Halteelement von unten in die Sonotrode hineinragt.

Nach einer weiteren Ausbildung der Erfindung können an der Schweißfläche Sonotrodennadeln, -zapfen oder, -vorsprünge vorgesehen sein, die insbesondere in zwei, drei oder auch vier vorzugsweise konzentrischen Ringen angeordnet sind. Auf diese Weise lässt sich die gewünschte Schweißenergie punktuell jedoch entlang des gesamten Umfangs des Werkstücks in dieses einleiten, so dass nach erfolgter Verschweißung hohe Abzugswerte erhalten werden. Die Sonotrodennadeln können beispielsweise als zahn- oder kegelförmige oder zylindrische Erhebungen ausgestaltet sein.

Nach einer weiteren vorteilhaften Ausführungsform kann der Sonotrodenkörper über zumindest 50 % seiner Längserstreckung als Hohlzylinder ausgebildet sein. Hierdurch werden einerseits gute Schweißergebnisse möglich. Andererseits kann der Innenraum des Hohlzylinders zur Aufnahme der Werkstückhalterung verwendet werden.

Nach einer weiteren vorteilhaften Ausführungsform kann an der Werkstückhalterung ein Klemmelement vorgesehen sein, mit dem ein Werkstück temporär fixierbar ist. Auf diese Weise kann verhindert werden, dass bei einer automatisierten Fertigung ein Werkstück versehentlich aus der Werkstückhalterung herausfällt, wenn die Sonotrode -beispielsweise mit Hilfe eines Manipulators - bewegt wird.

Nachfolgend wird eine Rundsonotrode unter Bezugnahme auf die beigefügten Zeichnungen beschrieben. Es zeigen:
- Fig. 1: eine perspektivische Ansicht einer Rundsonotrode;
- Fig. 2: eine Seitenansicht der Sonotrode von Fig. 1; und
- Fig. 3: einen Schnitt durch die Sonotrode von Fig. 1 und Fig. 2 entlang der Linie A-A von Fig. 2.

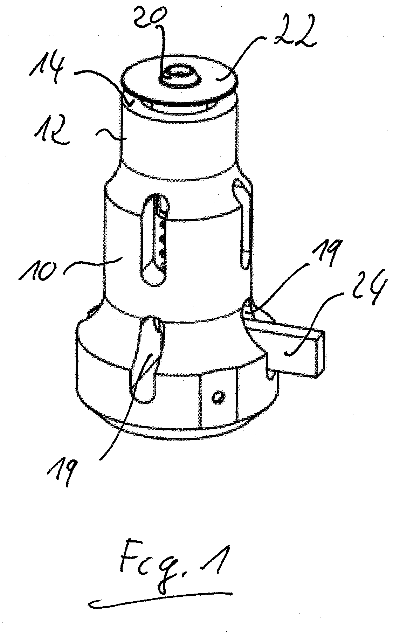

Die in den Fig. 1 bis 3 dargestellte Rundsonotrode weist einen grundsätzlich rotationssymmetrischen Sonotrodenkörper 10 auf, der an seinem vorderen Ende in einem Ringsteg 12 endet, der an seiner vorderen Stirnfläche eine Schweißfläche 14 bildet. Die Schweißfläche 14 bildet in Draufsicht einen Ringstreifen und kann nach einem in den Figuren nicht dargestellten Ausführungsbeispiel ganzflächig mit Sonotrodennadeln versehen sein, die in zwei, drei oder auch vier insbesondere konzentrischen Ringen angeordnet sind.

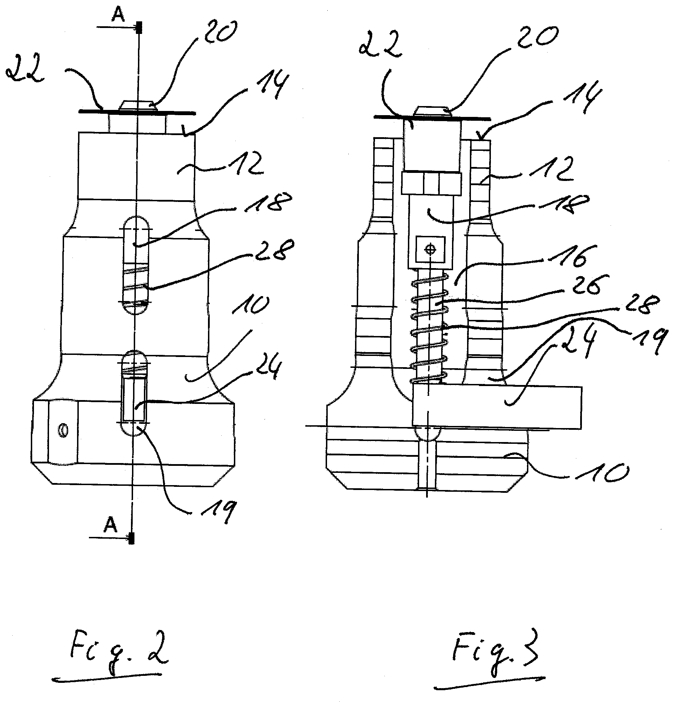

Wie insbesondere Fig. 3 verdeutlicht, ist der Sonotrodenkörper 10 über etwa 80 % seiner Längserstreckung hohlzylindrisch ausgebildet, so dass im Inneren des Sonotrodenkörpers 10 ein Aufnahmeraum 16 gebildet ist, der sich in Längsrichtung der Rundsonotrode bis hin zu der Schweißfläche 14 erstreckt. Erfindungsgemäß ist dabei in dem Aufnahmeraum 16 eine Werkstückhalterung 18 vorgesehen.

Die Werkstückhalterung 18 weist an ihrem vorderen Ende einen Zentrierdorn 20 auf, der sich über das vordere Ende des Sonotrodenkörpers 10 hinaus erstreckt und auf den ein Werkstück 22 aufgesetzt ist, das im dargestellten Ausführungsbeispiel ein Bauteil ist, das einen Hohlzylinder mit daran angeformter Ringscheibe umfasst. Hierbei sind natürlich auch andere Werkstückformen möglich, wie beispielsweise ein Hohlzylinder mit daran angeformter Platte in Viereckform.

Wie Fig. 3 weiterhin verdeutlicht, umfasst die Werkstückhalterung 18 ein Halteelement 24, das durch eine von mehreren Aussparungen 19 in dem Sonotrodenkörper 10 hindurchgeführt ist, welche dessen äußere Mantelfläche mit dem Aufnahmeraum 16 verbinden. Hierbei sind bei dem dargestellten Ausführungsbeispiel sowohl in der Mitte wie auch im hinteren Ende des Sonotrodenkörpers 10 jeweils vier gleichmäßig über den Umfang verteilte Aussparungen vorgesehen, die eine geschlossene Außenkontur besitzen und die ein ordnungsgemäßes Schwingen des Sonotrodenkörpers ermöglichen. Alternativ können auch mehr oder weniger Aussparungen vorgesehen sein, beispielsweise zwei oder sechs Aussparungen. Bei dem dargestellten Ausführungsbeispiel ist das Halteelement 24 lediglich durch eine der hinteren Aussparungen aus dem Aufnahmeraum 16 nach außen herausgeführt. Es wäre jedoch auch möglich, das Halteelement 24 durch eine andere Aussparung herauszuführen oder aber mehrere Halteelemente durch mehrere Aussparungen hindurchzuführen. In allen Fällen findet jedoch keine Berührung zwischen dem Sonotrodenkörper 10 und dem Halteelement 24 bzw. der Werkstückhalterung 18 statt.

Wie Fig. 3 verdeutlicht, ist mit dem Halteelement 24, das bei dem dargestellten Ausführungsbeispiel als Stab mit einem rechteckigen Querschnitt ausgebildet ist, eine Haltestange 26 befestigt. Hierbei ist der Zentrierdorn 20 gegen die Kraft einer Feder 28 in Axialrichtung relativ zu dem Sonotrodenkörper 10 bzw. zu der Haltestange 26 bewegbar.

Wenn mit der vorstehend beschriebenen Rundsonotrode ein Werkstück 22 an einer Gegenfläche verschweißt werden soll, wird zunächst das Werkstück 22 entweder manuell oder automatisiert auf den Zentrierdorn 20 aufgesetzt, wobei ein nicht dargestelltes mechanisches Codierelement in Form zumindest eines Vorsprungs oder dergleichen eine ordnungsgemäße Orientierung des Werkstücks an der Werkstückhalterung 18 sicherstellt.

Wenn sich das Werkstück 22 dann in der gewünschten Position an der Werkstückhalterung 18 befindet (vgl. Fig. 1 bis Fig. 3), kann die Rundsonotrode mit dem daran befindlichen Werkstück an eine Gegenfläche angestellt werden, die eine kreisförmige Öffnung aufweist, so dass der Zentrierdorn 20 in die Öffnung eingeführt werden kann. Wenn dann die Ringscheibe des Werkstücks 22 an der Gegenfläche anliegt und die Sonotrode weiter in Richtung der Gegenfläche bewegt wird, wird der Zentrierdorn 20 gegen die Kraft der Feder 28 relativ zu dem Sonotrodenkörper 12 in Richtung des hinteren Endes der Rundsonotrode bewegt, bis sich der Zwischenraum zwischen der Ringscheibe des Werkstücks 22 und der Schweißfläche 14 bis auf Null verringert hat, so dass die Schweißfläche 14 entlang ihres gesamten Umfangs ganzflächig an der Ringscheibe des Werkstücks 22 anliegt. Durch Beaufschlagung mit Ultraschall kann anschließend Energie eingeleitet werden, so dass sich das Werkstück und die Gegenfläche erwärmen und miteinander verschweißt werden können. Nach einem Zurückziehen der Rundsonotrode kann anschließend ein erneuter Schweißvorgang beginnen.

## Patentansprüche

1. Rundsonotrode, umfassend einen Sonotrodenkörper (10), der an seinem vorderen Ende einen Aufnahmeraum (16) für ein Werkstück aufweist, der von einem Ringsteg (12) umgeben ist, der an seiner vorderen Stirnseite eine Schweißfläche (14) aufweist,
wobei in dem Aufnahmeraum (16) eine Werkstückhalterung (18) vorgesehen ist, der Sonotrodenkörper (10) zumindest eine Aussparung (19) aufweist, die dessen äußere Mantelfläche mit dem Aufnahmeraum (16) verbindet,
ein Halteelement (24) der Werkstückhalterung (18) durch die Aussparung (19) hindurchgeführt ist, und
in die Rundsonotrode ein Sensor integriert ist, der das Vorhandensein und/oder eine ordnungsgemäße Orientierung eines Werkstücks (22) an der Werkstückhalterung (18) detektiert.

2. Rundsonotrode nach Anspruch 1,
**dadurch gekennzeichnet, dass**
die Werkstückhalterung (18) einen Zentrierdorn (20) aufweist.

3. Rundsonotrode nach Anspruch 2,
**dadurch gekennzeichnet, dass**
der Zentrierdorn (20) gegen eine Rückstellkraft, beispielsweise eine Feder (28) oder einen Pneumatikzylinder, relativ zu dem Sonotrodenkörper (10) bewegbar ist.

4. Rundsonotrode, umfassend einen Sonotrodenkörper (10), der an seinem vorderen Ende einen Aufnahmeraum (16) für ein Werkstück aufweist, der von einem Ringsteg (12) umgeben ist, der an seiner vorderen Stirnseite eine Schweißfläche (14) aufweist, wobei
in dem Aufnahmeraum (16) eine Werkstückhalterung (18) vorgesehen ist,
der Sonotrodenkörper (10) zumindest eine Aussparung (19) aufweist, die dessen äußere Mantelfläche mit dem Aufnahmeraum (16) verbindet,
ein Halteelement (24) der Werkstückhalterung (18) durch die Aussparung (19) hindurchgeführt ist,
die Aussparung eine zur Schweißfläche (14) hin offene Außenkontur besitzt, und an der Werkstückhalterung (18) ein Klemmelement vorgesehen ist, mit dem ein Werkstück (22) temporär fixierbar ist.

5. Rundsonotrode nach zumindest einem der vorstehenden Ansprüche,
**dadurch gekennzeichnet, dass**
die Werkstückhalterung (18) relativ zu dem Sonotrodenkörper (10) schwingungsentkoppelt gelagert ist.

6. Rundsonotrode nach zumindest einem der vorstehenden Ansprüche,
**dadurch gekennzeichnet, dass**
an der Schweißfläche (14) Sonotrodennadeln, -zapfen oder -vorsprünge vorgesehen sind, die insbesondere in zwei bis vier vorzugsweise konzentrischen Ringen angeordnet sind.

7. Rundsonotrode nach zumindest einem der vorstehenden Ansprüche,
**dadurch gekennzeichnet, dass**
der Sonotrodenkörper (10) über zumindest 50 % seiner Längserstreckung hohlzylindrisch ist.

## Claims

1. A round sonotrode, comprising a sonotrode body (10) which has a receiving space (16) for a workpiece at its front end, which receiving space (16) is surrounded by an annular web (12) which has a weld surface (14) at its front end face,
wherein a workpiece holder (18) is provided in the receiving space (16), the sonotrode body (10) has at least one cut-out (19) which connects its outer jacket surface to the receiving space (16),
a holding element (24) of the workpiece holder (18) is led through the cut-out (19), and
a sensor is integrated into the round sonotrode, which sensor detects the presence and/or a correct orientation of a workpiece (22) at the workpiece holder (18).

2. A round sonotrode in accordance with claim 1,
**characterized in that**
the workpiece holder (18) has a centering mandrel (20).

3. A round sonotrode in accordance with claim 2,
**characterized in that**
the centering mandrel (20) is movable relative to the sonotrode body (10) against a restoring force, for example a spring (28) or a pneumatic cylinder.

4. A round sonotrode, comprising a sonotrode body (10) which has a receiving space (16) for a workpiece at its front end, which receiving space (16) is surrounded by an annular web (12) which has a weld surface (14) at its front end face, wherein
a workpiece holder (18) is provided in the receiving space (16),
the sonotrode body (10) has at least one cut-out (19) which connects its outer jacket surface to the receiving space (16),
a holding element (24) of the workpiece holder (18) is led through the cut-out (19),
the cut-out has an outer contour open toward the weld surface (14), and
a clamping element with which a workpiece (22) can be temporarily fixed is provided at the workpiece holder (18).

5. A round sonotrode in accordance with at least one of the preceding claims,
**characterized in that**
the workpiece holder (18) is supported in a vibration-decoupled manner relative to the sonotrode body (10).

6. A round sonotrode in accordance with at least one of the preceding claims,
**characterized in that**
sonotrode needles, sonotrode pins or sonotrode projections are provided at the weld surface (14) and are in particular arranged in two to four rings, preferably concentric rings.

7. A round sonotrode in accordance with at least one of the preceding claims,
**characterized in that**
the sonotrode body (10) is hollow cylindrical over at least 50% of its longitudinal extent.

## Revendications

1. Sonotrode ronde, comportant un corps de sonotrode (10) qui présente à son extrémité avant un espace de logement (16) pour une pièce à œuvrer, qui est entouré par une barrette annulaire (12) qui présente sur sa face frontale avant une surface de soudage (14),
dans laquelle
un porte-pièce (18) est prévu dans l'espace de logement (16),
le corps de sonotrode (10) présente au moins une échancrure (19) qui relie sa surface enveloppe extérieure à l'espace de logement (16),
un élément de retenue (24) du porte-pièce (18) est mené à travers l'échancrure (19), et
un capteur est intégré dans la sonotrode ronde, lequel détecte la présence et/ou une orientation conforme d'une pièce à œuvrer (22) sur le porte-pièce (18).

2. Sonotrode ronde selon la revendication 1,
**caractérisée en ce que** le porte-pièce (18) comprend un mandrin de centrage (20).

3. Sonotrode ronde selon la revendication 2,
**caractérisée en ce que** le mandrin de centrage (20) est mobile par rapport au corps de sonotrode (10) à l'encontre d'une force de rappel, par exemple d'un ressort (28) ou d'un vérin pneumatique.

4. Sonotrode ronde, comportant un corps de sonotrode (10) qui présente à son extrémité avant un espace de logement (16) pour une pièce à œuvrer, qui est entouré par une barrette annulaire (12) qui présente sur sa face frontale avant une surface de soudage (14), dans laquelle un porte-pièce (18) est prévu dans l'espace de logement (16),
le corps de sonotrode (10) présente au moins une échancrure (19) qui relie sa surface enveloppe extérieure à l'espace de logement (16),
un élément de retenue (24) du porte-pièce (18) est mené à travers l'échancrure (19),
l'échancrure présente un contour extérieur ouvert vers la surface de soudage (14), et
un élément de serrage est prévu sur le porte-pièce (18), qui permet de fixer temporairement une pièce à œuvrer (22).

5. Sonotrode ronde selon l'une au moins des revendications précédentes,
**caractérisée en ce que** le porte-pièce (18) est monté en étant découplé vis-à-vis des vibrations par rapport au corps de sonotrode (10).

6. Sonotrode ronde selon l'une au moins des revendications précédentes,
**caractérisée en ce que** des aiguilles, des goujons ou des saillies de sonotrode sont prévus sur la surface de soudage (14), qui sont agencés en particulier en deux à quatre anneaux, de préférence concentriques.

7. Sonotrode ronde selon l'une au moins des revendications précédentes,
**caractérisée en ce que** le corps de sonotrode (10) est cylindrique creux au moins sur 50 % de son extension longitudinale.
